# EUROPÄISCHE PATENTSCHRIFT

(11) **EP 3 755 917 B1**
(45) Veröffentlichungstag und Bekanntmachung des Hinweises auf die Patenterteilung: **01.02.2023**
(21) Anmeldenummer: 19706948.7
(22) Anmeldetag: 19.02.2019
(51) Int. Cl.: F16D 48/06

(54) **VERFAHREN ZUR FUNKTIONSÜBERWACHUNG EINER REIBUNGSKUPPLUNG**
METHOD FOR MONITORING THE FUNCTIONS OF A FRICTION CLUTCH
PROCÉDÉ DE SURVEILLANCE DU FONCTIONNEMENT D'UN ACCOUPLEMENT À FRICTION

(30) Priorität: 23.02.2018 DE 102018104161
(43) Veröffentlichungstag der Anmeldung: 30.12.2020
(73) Patentinhaber: ZF CV Systems Europe BV, 1170 Brussels (BE)
(72) Erfinder: BRINKMANN, Stefan, 31515 Wunstorf (DE); HILLBRING, Dirk, 29225 Celle (DE); FEYERABEND, Konrad, 30625 Hannover (DE); GNIESMER, Volker, 31061 Alfeld (DE); STOFFELS, Ralf, 29581 Gerdau (DE)
(74) Vertreter: Copi, Joachim
(86) Internationale Anmeldenummer: PCT/EP2019/054067
(87) Internationale Veröffentlichungsnummer: WO 2019/162261

(56) Entgegenhaltungen:
- FR-A1- 2 743 128
- GB-A- 2 258 283
- US-A- 4 635 769

## Beschreibung

Die Erfindung betrifft ein Verfahren zur Funktionsüberwachung einer Reibungskupplung, die in einem Fahrzeug zwischen einem Antriebsmotor und einem Kompressor einer Druckluftversorgungsanlage angeordnet sowie pneumatisch ausrückbar und einrückbar ist, wobei im Förderbetrieb des Kompressors mindestens ein Betriebsparameter in einer elektronischen Steuereinheit sensorisch erfasst und ausgewertet wird, und bei einem von der elektronische Steuereinheit erkannten Schlupfbetrieb der Reibungskupplung ein in der elektronischen Steuereinheit abgespeicherter Wert für einen Abschaltdruck des Kompressors verringert wird. Ein Verfahren zur Funktionsüberwachung von einer Kupplung nach dem Stand der Technik ist in GB2258283 offenbart.

In Fahrzeugen, insbesondere schweren Straßenfahrzeugen und Schienenfahrzeugen, ist die Verwendung von Druckluftbremsanlagen üblich, welche jeweils von einer Druckluftversorgungsanlage mit gereinigter und getrockneter Druckluft versorgt werden. Moderne elektronisch gesteuerte Druckluftversorgungsanlagen weisen eine Druckluftaufbereitungseinheit mit Filter- und Trocknereinheiten, ein Mehrkreisschutzventil mit Überströmventilen mehrerer Druckluftverbraucherkreise und eine elektronische Steuereinheit auf, welcher auch Drucksensoren zur Erfassung von Versorgungsdrücken zugeordnet sein können. Durch einen Kompressor, der üblicherweise in Kolbenbauweise ausgeführt ist und durch das Einrücken einer Reibungskupplung an den Antriebsmotor des jeweiligen Fahrzeugs ankoppelbar ist, wird im Förderbetrieb Luft aus der Umgebung angesaugt, verdichtet und über eine Trocknerleitung der Druckluftaufbereitungseinheit in mindestens eine Hauptversorgungsleitung gefördert. Von der Hauptversorgungsleitung zweigen über jeweils ein Überströmventil eines Mehrkreisschutzventils mehrere Versorgungsleitungen von Druckluftverbraucherkreisen ab. An die Hauptversorgungsleitung und/oder die Versorgungsleitungen zumindest einiger Druckluftverbraucherkreise ist üblicherweise jeweils ein Drucksensor zur Erfassung des jeweiligen Versorgungsdrucks angeschlossen.

Der Kompressor wird bei Erreichen oder Unterschreiten eines vorgegebenen Einschaltdrucks p_{cut-on} eines sensorisch erfassten Versorgungsdrucks p_{sys} durch das Einrücken der zugeordneten Reibungskupplung in den Förderbetrieb geschaltet und bei Erreichen oder Überschreiten eines vorgegebenen Abschaltdrucks p_{cut-off} des Versorgungsdrucks p_{sys} durch das Ausrücken der Reibungskupplung abgeschaltet.

Der Aufbau einer zwischen einem Antriebsmotor und einem Kompressor angeordneten, pneumatisch einrückbaren und ausrückbaren Reibungskupplung ist beispielsweise aus der DE 10 2008 003 957 A1 bekannt. In dieser Reibungskupplung ist eine drehfest mit einer Antriebswelle eines Antriebsmotors verbundene und mit Reibbelägen versehene Kupplungsscheibe durch eine Anpressfeder in einer Druckplatte eingespannt. Die Druckplatte ist drehfest mit einer Antriebswelle des Kompressors verbunden. Durch die Beaufschlagung eines axial benachbarten Druckraums mit einem hohen Steuerdruck ist die Einspannung der Kupplungsscheibe über einen in dem Druckraum axialbeweglich geführten Ausrückkolben, der über ein Ausrücklager und einen Ausrückmechanismus mit der Druckplatte in Stellverbindung steht, lösbar. Die Reibungskupplung ist somit bei drucklosem Druckraum eingerückt und bei druckbeaufschlagtem Druckraum ausgerückt. Die Steuerung des Schaltdrucks der Reibungskupplung erfolgt über ein zugeordnetes Kompressorsteuerventil, das von der elektronischen Steuereinheit der Druckluftversorgungsanlage ansteuerbar ist.

Kommt es im Förderbetrieb des Kompressors, also bei eingerückter Reibungskupplung und laufendem Antriebsmotor, zu einem Schlupfbetrieb der Reibungskupplung, so kann der vorgesehene Abschaltdruck p_{cut-off} nicht mehr erreicht werden, und es kommt relativ schnell zu einer Überhitzung und einer thermischen Zerstörung der Reibungskupplung. Eine zerstörte Reibungskupplung hat einen Totalausfall des Kompressors zur Folge, so dass das betreffende Fahrzeug nur noch eine begrenzte Fahrstrecke weiterfahren kann, die im Wesentlichen von der in den Betriebsbremskreisen gespeicherten Druckluft bestimmt ist. Das Fahrzeug bleibt dann meistens irgendwo liegen und muss dann entweder vor Ort repariert oder in eine Werkstatt abgeschleppt werden. Die Ursache für eine schlupfende Reibungskupplung liegt üblicherweise an stark abgenutzten Reibbelägen. Eine schlupfende Reibungskupplung kann aber auch durch eine ermüdete oder gebrochene Anpressfeder, einen verklemmten Ausrückkolben oder ein defektes Kompressorsteuerventil verursacht werden.

Um einen Ausfall einer Reibungskupplung eines Kompressors zu verhindern, wird diese bei Serviceaufenthalten in Werkstätten häufig vorsorglich gegen eine neue oder überholte Reibungskupplung ausgetauscht, obwohl insbesondere die Reibbeläge der vorhandenen Reibungskupplung noch für eine längere Betriebszeit oder Fahrstrecke geeignet sind. Es besteht daher ein Bedarf für ein Verfahren zur Funktionsüberwachung einer Reibungskupplung eines Kompressors, mit dem ein starker Kupplungsverschleiß sowie Schlupfbetrieb einer Reibungskupplung erkannt und Maßnahmen für einen begrenzten Weiterbetrieb des Kompressors und damit für eine Weiterfahrt des betreffenden Fahrzeugs zumindest bis in die nächstgelegene Werkstatt getroffen werden können.

In der DE 10 2008 003 957 A1 ist ein diesbezügliches Verfahren beschrieben, bei dem eine im Förderbetrieb eines Kompressors schlupfende Reibungskupplung dadurch erkannt wird, dass die sensorisch erfassten Drehzahlen des Antriebsmotors und des Kompressors voneinander abweichen. Bei erkanntem Schlupfbetrieb der Reibungskupplung wird der Abschaltdruck des Kompressors stufenweise so weit reduziert, bis innerhalb einer vorgegebenen Toleranz keine Drehzahldifferenz zwischen der Motordrehzahl und der Kompressordrehzahl mehr auftritt, also kein Schlupfbetrieb der Reibungskupplung mehr vorliegt. Mit dem dadurch reduzierten Versorgungsdruck p_{sys} der Druckluftverbraucherkreise, insbesondere der Betriebsbremskreise, ist eine begrenzte Weiterfahrt des Fahrzeugs zumindest bis in die nächstgelegene Werkstatt möglich.

Nachteilig setzt das vorbeschriebene Verfahren aber einen die Herstellkosten erhöhenden und oft nicht vorhandenen Drehzahlsensor voraus, der an der Antriebswelle oder einem anderen rotierenden Bauteil des Kompressors angeordnet ist und dessen Drehzahl misst. Der vorliegenden Erfindung lag daher die Aufgabe zugrunde, ein Verfahren zur Funktionsüberwachung einer Reibungskupplung im Antriebsstrang eines Kompressors der eingangs genannten Art anzugeben, das mit den in einer elektronisch gesteuerten Druckluftversorgungsanlage üblicherweise vorhandenen Sensoren auskommt, also keine Anordnung eines zusätzlichen Sensors erfordert.

Das erfindungsgemäße Verfahren zur Funktionsüberwachung einer Reibungskupplung sieht in Verbindung mit den eingangs genannten Merkmalen des Oberbegriffs des Anspruchs 1 vor, dass im Förderbetrieb des Kompressors ein Versorgungsdruck p_{sys} in einer Hauptversorgungsleitung mehrerer Druckluftverbraucherkreise oder in einer Versorgungsleitung mindestens eines Druckluftverbraucherkreises fortlaufend sensorisch erfasst wird, dass ein Schlupfbetrieb der Reibungskupplung dadurch erkannt wird, dass der Versorgungsdruck p_{sys} innerhalb einer vorgegebenen Toleranzbreite Δp_{T} und innerhalb eines vorgegebenen Haltezeitraums T_{H} auf einem konstanten Plateaudruck p_{PI}, verharrt, welcher unterhalb des Abschaltdrucks p_{cut-off} des Kompressors liegt (p_{PI} < p_{cut-off}), und dass nach einem erkannten Schlupfbetrieb der Reibungskupplung der Förderbetrieb des Kompressors durch das Ausrücken der Reibungskupplung beendet wird, der Wert für den Abschaltdruck p_{cut-off} des Kompressors auf einen korrigierten Abschaltdruck p_{cut-off_c} reduziert wird, welcher um eine vorgegebene Druckdifferenz Δp_{c} unterhalb des Plateaudrucks p_{PI}, liegt (p_{cut-off_c} = p_{PI} - Δp_{c}), und ein Warnsignal und/oder eine Warninformation ausgegeben wird.

Das erfindungsgemäße Verfahren geht demnach von einer Reibungskupplung aus, die in an sich bekannter Weise in einem Fahrzeug zwischen einem Antriebsmotor und einem Kompressor einer Druckluftversorgungsanlage angeordnet sowie pneumatisch ausrückbar und einrückbar ist. Durch die sensorische Erfassung eines Versorgungsdrucks p_{sys} in einer Hauptversorgungsleitung mehrerer Druckluftverbraucherkreise vor einem Mehrkreisschutzventil oder in einer Versorgungsleitung mindestens eines Druckluftverbraucherkreises nach einem Überströmventil des Mehrkreisschutzventils wird gemäß diesem Verfahren auf die Messwerte eines in einer elektronisch gesteuerten Druckluftversorgungsanlage ohnehin vorhandenen Drucksensors zurückgegriffen. Anhand der Ausbildung eines weitgehend konstanten Plateaudrucks p_{PI}, der unterhalb des zuvor festgelegten Wertes für den Abschaltdruck p_{cut-off} liegt (p_{PI} < p_{cut-off}), wird erkannt, dass sich die Reibungskupplung im Schlupfbetrieb befindet und daher der Abschaltdruck p_{cut-off} nicht erreicht werden kann.

Um eine nachhaltige Zerstörung der Reibungskupplung zu verhindern, wird dann zunächst der Förderbetrieb des Kompressors durch das Ausrücken der Reibungskupplung beendet. Zudem wird der im elektronischen Steuergerät der Druckluftversorgungsanlage hinterlegte Wert für den Abschaltdruck p_{cut-off} des Kompressors auf einen korrigierten Abschaltdruckwert p_{cut-off_c} abgesenkt, der um eine vorgegebene Druckdifferenz p_{c} unterhalb des Plateaudrucks p_{PI}, liegt (p_{cut-off_c} = p_{PI} - Pe).

Dadurch wird aufgrund einer entsprechend niedrigeren Förderlast des Kompressors bei nachfolgenden Förderbetrieben ein Schlupfbetrieb der Reibungskupplung vermieden, jedoch eine begrenzte Druckluftversorgung der Druckluftverbraucherkreise, insbesondere der Betriebsbremskreise, aufrecht erhalten. Schließlich wird der Fahrer durch die Ausgabe eines Warnsignals und/oder einer Warninformation auf die eingeschränkte Funktion des Kompressors und damit einer eingeschränkten Druckluftversorgung insbesondere der Betriebsbremskreise des Fahrzeugs aufmerksam gemacht.

Es liegt dann im Ermessen des Fahrers des Fahrzeugs, ob er noch eine mehr oder weniger lange Fahrstrecke zurücklegt und erst danach zur Reparatur der Reibungskupplung beziehungsweise des Kompressors eine Werkstatt anfährt, oder ob er zu diesem Zweck sofort oder auf dem kürzesten Weg eine Werkstatt aufsucht. Mit dem erfindungsgemäßen Verfahren wird jedenfalls verhindert, dass das betreffende Fahrzeug unterwegs mit vollständig ausgefallener Druckluftversorgung liegen bleibt und dann entweder vor Ort repariert oder in eine Werkstatt abgeschleppt werden muss.

Da es möglich ist, dass die Reibungskupplung am Kompressor, zum Beispiel aufgrund eines verklemmten Ausrückkolbens der Reibungskupplung oder eines verklemmten Schaltkolbens des Kompressorsteuerventils, nicht vollständig eingerückt ist und sich deshalb im Schlupfbetrieb befindet, kann auch vorgesehen sein, dass der Wert des Abschaltdruck p_{cut-off} für den Kompressor erst dann auf einen korrigierten Abschaltdruckwert p_{cut-off_c} abgesenkt und ein Warnsignal und/oder eine Warninformation ausgegeben wird, wenn der Versorgungsdruck p_{sys} in mehreren aufeinanderfolgenden Förderbetriebsphasen T_{F1}, T_{F2}, T_{F3}, ... T_{Fn} des Kompressors jeweils auf einem konstanten Plateaudruck p_{PI}, verharrt, welcher unterhalb des Abschaltdruckwerts p_{cut-off} des Kompressors liegt (p_{PI} < p_{cut-off}). Handelt es sich bei dem Schlupfbetrieb der Reibungskupplung um eine einmalige Fehlfunktion, die durch ein wiederholtes Ein- und Ausrücken der Reibungskupplung zu beheben ist, wird der Abschaltdruck p_{cut-off} bei nachfolgenden Förderbetriebsphasen wieder erreicht, so dass die vorgesehenen Maßnahmen zum Schutz der Reibungskupplung und zur Ermöglichung einer Weiterfahrt des Fahrzeugs unterbleiben können.

Um eine thermische Überlastung und Zerstörung der Reibungskupplung zu verhindern, ist bevorzugt vorgesehen, dass zwischen aufeinanderfolgenden Förderbetriebsphasen T_{F1} , T_{F2}, T_{F3}, ...T_{Fn} des Kompressors jeweils eine vorgegebene Mindestabkühlzeit T_{cd} eingehalten wird, in der die Reibungskupplung ausgerückt bleibt. Diese Mindestabkühlzeit T_{cd} sollte auch dann eingehalten werden, wenn der Versorgungsdruck p_{sys} den Einschaltdruckwert p_{cut-on} erreicht oder unterschritten hat, da sonst mit einer Zerstörung der Reibungskupplung und infolgedessen mit einem Totalausfall der Druckluftversorgung zu rechnen ist.

Um den Fahrer des Fahrzeugs in angemessener Weise über die reduzierte Förderleistung des Kompressors und den demzufolge abgesenkten Abschaltdruckwert p_{cut-off_c} des Versorgungsdrucks p_{sys} zu informieren, ist es gemäß einer Weiterbildung der Erifindung vorteilhaft, wenn der Arbeitsdruckbereich Δp_{sys} des Kompressors zwischen dem Einschaltdruck p_{cut-on} und dem Abschaltdruck p_{cut-off} in mehrere Teildruckbereiche A, B, C unterteilt wird, und dass abhängig davon, in welchem Teildruckbereich A, B, C sich der korrigierte Abschaltdruckwert p_{cut-off_c} befindet, unterschiedliche, an den jeweiligen Teildruckbereich A, B, C angepasste Warnsignale und/oder Warninformationen ausgegeben werden. Es ist aber auch möglich, nur einen einzigen Druckbereich für diesen Zweck zu definieren und zu nutzen.

Entsprechend dieser Strategie ist vorgesehen, dass der Arbeitsdruckbereich Δp_{sys} des Kompressors zwischen dem Einschaltdruckwert p_{cut-on} und dem Abschaltdruckwert p_{cut-off} in drei Teildruckbereiche A, B, C unterteilt wird, und dass dann, wenn sich der korrigierte Abschaltdruckwert p_{cut-off_c} innerhalb des oberen Teildruckbereichs A befindet, eine Warninformation ausgegebenen wird, mit welcher der Fahrer über den leicht abgesenkten Abschaltdruckwert p_{cut-off_c} informiert sowie aufgefordert wird, innerhalb einer längeren Betriebszeit oder Fahrstrecke eine Werkstatt anzufahren. In diesem Fall kann die auf einem Display angezeigte und/oder per Sprache über einen Lautsprecher ausgegebene Warninformation zum Beispiel "Leicht abgesenkter Versorgungsdruck ! Innerhalb einer Betriebszeit von drei Tagen oder einer Fahrstrecke von 1000 km eine Werkstatt aufsuchen !" lauten.

Sofern sich der korrigierte Abschaltdruckwert p_{cut-off_c} dagegen innerhalb des mittleren Teildruckbereichs B befindet, wird eine entsprechende Warninformation ausgegebenen, mit welcher der Fahrer über den deutlich abgesenkten Abschaltdruckwert p_{cut-off_c} informiert und aufgefordert wird, innerhalb einer kürzeren Betriebszeit oder Fahrstrecke eine Werkstatt anzufahren. In diesem Fall kann die auf einem Display angezeigte und/oder per Sprache über einen Lautsprecher ausgegebene Warninformation zum Beispiel "Abgesenkter Versorgungsdruck ! Nach der aktuellen Fahrt oder einer Fahrstrecke von maximal 300 km eine Werkstatt aufsuchen !" lauten.

Wenn sich der korrigierte Abschaltdruckwert p_{cut-off_c} jedoch innerhalb des unteren Teildruckbereichs C befindet, wird eine entsprechende Warninformation ausgegeben, mit welcher der Fahrer über den stark abgesenkten Abschaltdruck p_{cut-off_c} informiert und aufgefordert wird, sofort und auf dem kürzesten Weg eine Werkstatt anzufahren. In diesem Fall kann die auf einem Display angezeigte und/oder per Sprache über einen Lautsprecher ausgegebene Warninformation zum Beispiel "Stark abgesenkter Versorgungsdruck ! Sofort eine Werkstatt aufsuchen !" lauten.

Zur Anzeige des Versorgungsdrucks p_{sys} in Relation zum Einschaltdruckwert p_{cut-on} und Abschaltdruckwert p_{cut-off} ; p_{cut-off_c} für den Kompressor und zur Ausgabe eines Warnsignals kann vorgesehen sein, dass der aktuelle Versorgungsdruck p_{sys} sowie der Einschaltdruckwert p_{cut-on} und der Einschaltdruckwert p_{cut-off} oder der korrigierte Einschaltdruckwert p_{cut-off_c} für den Kompressor in einem Anzeigeinstrument angezeigt werden, und dass bei Vorliegen eines abgesenkten Abschaltdruckwerts p_{cut-off_c} eine zugeordnete Warnleuchte aufleuchtet und/oder ein akustisches Warnsignal ausgegeben wird.

Zur weiteren Verdeutlichung der Erfindung ist der Beschreibung eine Zeichnung mit Ausführungsbeispielen beigefügt. In dieser zeigt
Fig. 1 ein Diagramm mit dem zeitlichen Verlauf eines Versorgungsdrucks während eines Förderbetriebs eines Kompressors,
Fig. 2 den schematischen Aufbau einer typischen Druckluftversorgungsanlage eines Fahrzeugs,
Fig. 3 ein Diagramm mit dem zeitlichen Verlauf eines Versorgungsdrucks während drei aufeinanderfolgenden Förderbetrieben eines Kompressors,
Fig. 4a zwei kombinierte Anzeigeinstrumente bei nicht abgesenktem Abschaltdruck des Kompressors, und
Fig. 4b die zwei kombinierten Anzeigeinstrumente gemäß Fig. 4a bei abgesenktem Abschaltdruck des Kompressors.

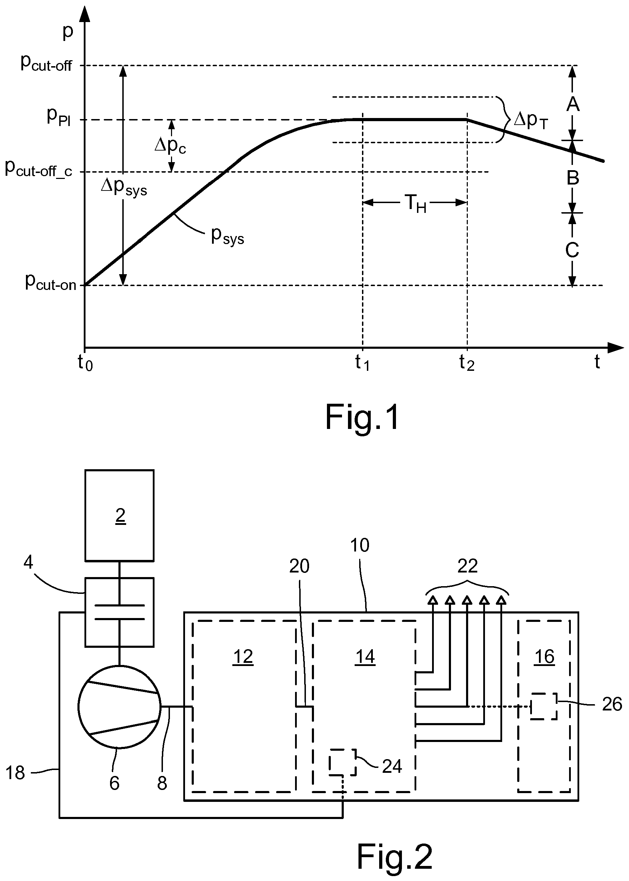

In Fig. 2 sind ein Kompressor 6 und eine elektronisch gesteuerte Druckluftversorgungsanlage 10 eines Fahrzeugs in schematischer Form dargestellt, bei denen das erfindungsgemäße Verfahren zur Funktionsüberwachung einer Reibungskupplung 4 anwendbar ist. Die Reibungskupplung 4 ist zwischen einem Antriebsmotor 2 des Fahrzeugs und dem Kompressor 6 angeordnet und pneumatisch ausrückbar und einrückbar. Die Druckluftversorgungsanlage 10 umfasst die Baugruppen einer Druckluftaufbereitungseinheit 12, einer Mehrkreisschutzventileinheit 14 und einer elektronischen Steuereinheit 16.

An einen Steuerdruckeingang der Reibungskupplung 4 ist eine Steuerdruckleitung 18 angeschlossen. Bei druckloser Steuerdruckleitung 18 ist die Reibungskupplung 4 eingerückt, so dass sich der Kompressor 6 bei laufendem Antriebsmotor 2 im Förderbetrieb befindet. Wenn die Steuerdruckleitung 18 unter einem ausreichend hohen Steuerdruck steht, wird die Reibungskupplung 4 ausgerückt, wodurch der Kompressor 6 abgeschaltet wird. Im Förderbetrieb saugt der Kompressor 6 Luft aus der Umgebung an und fördert diese als verdichtete Druckluft in eine an die Druckluftaufbereitungseinheit 12 angeschlossene Förderleitung 8.

In der Druckluftaufbereitungseinheit 12 wird die geförderte Druckluft gereinigt sowie getrocknet und gelangt ausgangsseitig in eine Hauptversorgungsleitung 20. In der Mehrkreisschutzventileinheit 14 verzweigt die Hauptversorgungsleitung 20 über jeweils ein Überströmventil eines Mehrkreisschutzventils in Versorgungsleitungen 22 mehrerer Druckluftverbraucherkreise. Innerhalb der Mehrkreisschutzventileinheit 14 ist auch ein Kompressorsteuerventil 24 angeordnet, das von einer elektronischen Steuereinheit der Steuereinheit 16 ansteuerbar ist, und über das die Steuerdruckleitung 18 der Reibungskupplung 4 wechselweise drucklos schaltbar oder mit einem Steuerdruck beaufschlagbar ist. Innerhalb der Steuereinheit 16 ist auch mindestens ein Drucksensor 26 angeordnet, mittels dem der Versorgungsdruck p_{sys} in der Hauptversorgungsleitung 20 vor dem Mehrkreisschutzventil oder in einer der Versorgungsleitungen 22 nach dem zugeordneten Überströmventil des Mehrkreisschutzventils sensorisch erfassbar ist. Vorliegend ist der Drucksensor beispielhaft an eine Versorgungsleitung 22 einer der Druckluftverbraucherkreise angeschlossen.

Die Betriebssteuerung des Kompressors 6 erfolgt üblicherweise derart, dass dieser bei laufendem Antriebsmotor 2 durch das Einrücken der Reibungskupplung 4 eingeschaltet, also in den Förderbetrieb geschaltet wird, wenn der Versorgungsdruck p_{sys} einen vorgegebenen Einschaltdruckwert p_{cut-on} erreicht oder unterschritten hat (p_{sys} ≤ p_{cut-on}). Ebenso wird der Kompressor 6 durch das Ausrücken der Reibungskupplung 4 abgeschaltet, wenn der Versorgungsdruck p_{sys} während des Förderbetriebs einen vorgegebenen Abschaltdruckwert p_{cut-off} erreicht oder überschritten hat (p_{sys} ≥ p_{cut-off}).

In dem Diagramm gemäß Fig. 1 ist der zeitliche Verlauf eines Versorgungsdrucks p_{sys} während eines Förderbetriebs des Kompressors 6, also bei laufendem Antriebsmotor 2 und eingerückter Reibungskupplung 4 dargestellt. Der Förderbetrieb des Kompressors 6 beginnt zum Zeitpunkt t₀ und endet zum Zeitpunkt t₂. Ab dem Zeitpunkt t₁ verharrt der Versorgungsdruck p_{sys} auf einem weitgehend konstanten Plateaudruckwert p_{PI}, der unterhalb des Abschaltdruckwerts p_{cut-off} liegt (p_{PI} < p_{cut-off}). In diesem Fall liegt mit hoher Wahrscheinlichkeit ein Schlupfbetrieb der Reibungskupplung 4 vor, der zum einen dazu führt, dass der Versorgungsdruck p_{sys} den Abschaltdruckwert p_{cut-off} nicht erreichen kann. Gravierender ist jedoch, dass ein längerer Schlupfbetrieb der Reibungskupplung 4 zu einer thermischen Zerstörung der Reibungskupplung 4 und demzufolge zu einem Ausfall des Kompressors 6 führt. Da dadurch die Druckluftversorgung der Druckluftverbraucherkreise, insbesondere auch der Betriebsbremskreise des Fahrzeugs entfällt, kann das Fahrzeug auf freier Strecke liegen bleiben und muss dann vor Ort repariert oder zur Reparatur in eine Werkstatt abgeschleppt werden.

Das nachfolgend beschriebene Verfahren zur Funktionsüberwachung einer derartigen Reibungskupplung 4 dient dazu, eine Zerstörung der Reibungskupplung 4 zu verhindern und eine begrenzte Funktionstüchtigkeit der Druckluftversorgung der Druckluftverbraucherkreise, insbesondere der Betriebsbremskreise, aufrecht zu erhalten.

Das erfindungsgemäße Verfahren sieht vor, dass im Förderbetrieb des Kompressors 6 ein Versorgungsdruck p_{sys} in einer Hauptversorgungsleitung 20 mehrerer Druckluftverbraucherkreise oder in einer Versorgungsleitung 22 mindestens eines Druckluftverbraucherkreises fortlaufend sensorisch erfasst wird, und dass ein Schlupfbetrieb der Reibungskupplung 4 dadurch erkannt wird, dass der Versorgungsdruck p_{sys} innerhalb eines vorgegebenen Haltezeitraums T_{H} sowie einer vorgegebenen Toleranzbreite Δp_{T} auf einem konstanten Plateaudruckwert p_{PI}, verharrt, welcher unterhalb des Abschaltdruckwerts p_{cut-off} des Kompressors liegt (p_{PI} < p_{cut-off}), und dass nach einem erkannten Schlupfbetrieb der Reibungskupplung 4 der Förderbetrieb des Kompressors 6 durch das Ausrücken der Reibungskupplung 4 beendet wird, der Abschaltdruckwert p_{cut-off} des Kompressors 6 auf einen korrigierten Abschaltdruckwert p_{cut-off_c} abgesenkt wird, welcher um eine vorgegebene Druckdifferenz Δp_{c} unterhalb des Plateaudruckwerts p_{PI} liegt (p_{cut-off_c} = p_{PI} - p_{c}), und ein Warnsignal und/oder eine Warninformation ausgegeben wird.

Durch die sensorische Erfassung des Versorgungsdrucks p_{sys} wird bei dem Verfahren gemäß der Erfindung auf einen in einer elektronisch gesteuerten Druckluftversorgungsanlage ohnehin vorhandenen Drucksensor 26 zurückgegriffen. Anhand der Ausbildung eines weitgehend konstanten Plateaudruckwerts p_{PI}, der unterhalb des Abschaltdruckwerts p_{cut-off} liegt (p_{PI} < p_{cut-off}), wird erkannt, dass sich die Reibungskupplung 4 im Schlupfbetrieb befindet und daher der Abschaltdruckwert p_{cut-off} nicht erreicht werden kann.

Um eine nachhaltige Zerstörung der Reibungskupplung 4 zu verhindern, wird dann zunächst der Förderbetrieb des Kompressors 6 durch das Ausrücken der Reibungskupplung 4 beendet. Zudem wird der im elektronischen Steuergerät der Druckluftversorgungsanlage 10 hinterlegte Abschaltdruckwert p_{cut-off} des Kompressors 6 auf einen korrigierten Abschaltdruckwert p_{cut-off_c} abgesenkt, welcher um eine vorgegebene Druckdifferenz p_{c} unterhalb des Plateaudruckwerts p_{PI}, liegt (p_{cut-off_c} = p_{PI} - p_{c}). Somit wird aufgrund einer entsprechend niedrigeren Förderlast des Kompressors 6 bei nachfolgenden Förderbetrieben ein Schlupfbetrieb der Reibungskupplung 4 vermieden, jedoch eine begrenzte Druckluftversorgung der Druckluftverbraucherkreise, insbesondere der Betriebsbremskreise, aufrecht erhalten.

Schließlich wird der Fahrer durch die Ausgabe eines Warnsignals und/oder einer Warninformation auf die eingeschränkte Funktion des Kompressors 6 und damit einer eingeschränkten Druckluftversorgung insbesondere der Betriebsbremskreise des Fahrzeugs aufmerksam gemacht. Es liegt dann im Ermessen des Fahrers, ob er noch eine mehr oder weniger lange Fahrstrecke zurücklegt und erst danach zur Reparatur der Reibungskupplung 4 beziehungsweise des Kompressors 6 eine Werkstatt anfährt, oder ob er zu diesem Zweck sofort und auf dem kürzesten Weg eine Werkstatt aufsucht. Mit dem erfindungsgemäßen Verfahren wird jedenfalls verhindert, dass das betreffende Fahrzeug unterwegs mit vollständig ausgefallener Druckluftversorgung liegen bleibt und dann entweder vor Ort repariert oder in eine Werkstatt abgeschleppt werden muss.

In einer ebenfalls in dem Diagramm gemäß Fig. 1 dargestellten Weiterbildung des erfindungsgemäßen Verfahrens ist vorgesehen, dass der Arbeitsdruckbereich Δp_{sys} des Kompressors 6 zwischen dem Einschaltdruckwert p_{cut-on} und dem Abschaltdruckwert p_{cut-off} in mehrere Teildruckbereiche A, B, C unterteilt wird. Hierbei werden abhängig davon, in welchem Teildruckbereich A, B, C sich der korrigierte Abschaltdruckwert p_{cut-off_c} befindet, unterschiedliche, an den jeweiligen Teildruckbereich A, B, C angepasste Warnsignale und/oder Warninformationen ausgegeben. Vorliegend ist der Arbeitsdruckbereich Δp_{sys} des Kompressors 6 in drei Teildruckbereiche A, B, C unterteilt, in einen oberen Teildruckbereich A, einen mittleren Teildruckbereich B und einen unteren Teildruckbereich C.

Da der korrigierte Abschaltdruckwert p_{cut-off_c} des Kompressors 6 vorliegend beispielhaft in dem mittleren Teildruckbereich B liegt, wird eine entsprechende Warninformation ausgegebenen, mit welcher der Fahrer über den deutlich abgesenkten Abschaltdruckwert p_{cut-off_c} informiert und aufgefordert wird, innerhalb einer kürzeren Betriebszeit oder Fahrstrecke eine Werkstatt anzufahren. Eine entsprechende Warninformation, die auf einem Display angezeigt und/oder per Sprache über einen Lautsprecher ausgegeben wird, könnte wie folgt lauten: "Abgesenkter Versorgungsdruck ! Nach der aktuellen Fahrt oder einer Fahrstrecke von maximal 300 km eine Werkstatt aufsuchen !".

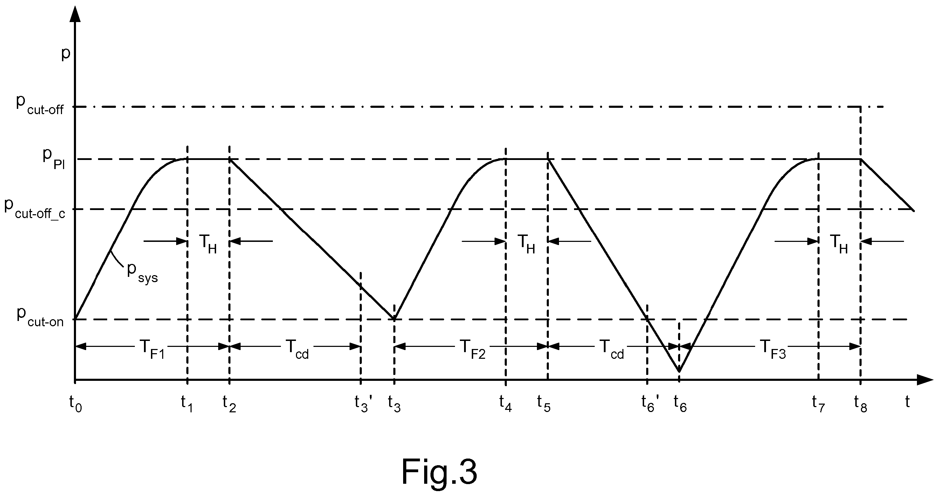

In einer in dem Diagramm gemäß Fig. 3 dargestellten Weiterbildung des erfindungsgemäßen Verfahrens ist vorgesehen, dass der Abschaltdruckwert p_{cut-off} des Kompressors 6 erst dann auf einen korrigierten Abschaltdruckwert p_{cut-off_c} abgesenkt und ein Warnsignal und/oder eine Warninformation ausgegeben wird, wenn der Versorgungsdruck p_{sys} in mehreren aufeinanderfolgenden Förderbetriebsphasen T_{F1}, T_{F2}, T_{F3}, ...T_{Fn} des Kompressors 6 jeweils auf einen zumindest weitgehend konstanten Plateaudruckwert p_{PI}, verharrt, welcher unterhalb des Abschaltdruckwerts p_{cut-off} des Kompressors liegt (p_{PI} < p_{cut-off}). Vorliegend sind hierzu beispielhaft drei aufeinanderfolgende Förderbetriebsphasen T_{F1}, T_{F2}, T_{F3} des Kompressors 6 vorgesehen, zwischen denen jeweils eine vorgegebene Mindestabkühlzeit T_{cd} eingehalten wird, in der die Reibungskupplung 4 ausgerückt bleibt.

Die erste Förderbetriebsphase T_{F1} des Kompressors 6 findet zwischen den Zeitpunkten t₀ und t₂ statt. Die zweite Förderbetriebsphase T_{F2} des Kompressors 6 beginnt zum Zeitpunkt t₃ und endet zum Zeitpunkt t₅. Die dritte Förderbetriebsphase T_{F3} des Kompressors 6 findet zwischen den Zeitpunkten t₆ und t₈ statt. Zwischen der ersten Förderbetriebsphase T_{F1} und der zweiten Förderbetriebsphase T_{F2} des Kompressors 6 wird die Mindestabkühlzeit T_{cd}, die zum Zeitpunkt t₃' endet, überschritten, da der Versorgungsdruck p_{sys} den Einschaltdruckwert p_{cut-on} des Kompressors 6 aufgrund eines geringen Druckluftverbrauchs erst nach Ablauf der Mindestabkühlzeit T_{cd} erreicht. Zwischen dem zweiten Förderbetrieb T_{F2} und dem dritten Förderbetrieb T_{F3} des Kompressors 6 wird die Mindestabkühlzeit T_{cd} eingehalten, obwohl der Versorgungsdruck p_{sys} den Einschaltdruck p_{cut-on} des Kompressors 6 aufgrund eines erhöhten Druckluftverbrauchs schon zuvor zum Zeitpunkt t₆' erreicht und unterschritten hat.

Durch das Abwarten mehrerer aufeinanderfolgender Förderbetriebsphasen T_{F1}, T_{F2}, T_{F3} des Kompressors 6 vor einer Absenkung des Abschaltdruckwerts p_{cut-off} wird berücksichtigt, dass ein Schlupfbetrieb der Reibungskupplung 4 auf einen einmaligen Effekt, wie zum Beispiel auf einen wegen eines verklemmten Ausrückkolbens der Reibungskupplung 4 oder eines verklemmten Schaltkolbens des Kompressorsteuerventils 24, nicht vollständig eingerückten Zustand, zurückzuführen ist, der durch mehrfaches Aus-und Einrücken der Reibungskupplung 4 behoben werden kann. Erst wenn sich in mehreren aufeinanderfolgenden Förderbetriebsphasen T_{F1}, T_{F2}, T_{F3} des Kompressors 6 jeweils erkennbar ein Schlupfbetrieb der Reibungskupplung 4 eingestellt hat, wird von einer dauerhaften Schädigung der Reibungskupplung 4, beispielsweise durch abgenutzte Reibbeläge, ausgegangen, und der Abschaltdruckwert p_{cut-off} des Kompressors 6 auf den korrigierten Abschaltdruckwert p_{cut-off_c} abgesenkt. Durch das Einhalten der Mindestabkühlzeit T_{cd} zwischen den Förderbetriebsphasen T_{F1}, T_{F2}, T_{F3} des Kompressors 6 wird eine thermische Überlastung und Zerstörung der Reibungskupplung 4 verhindert.

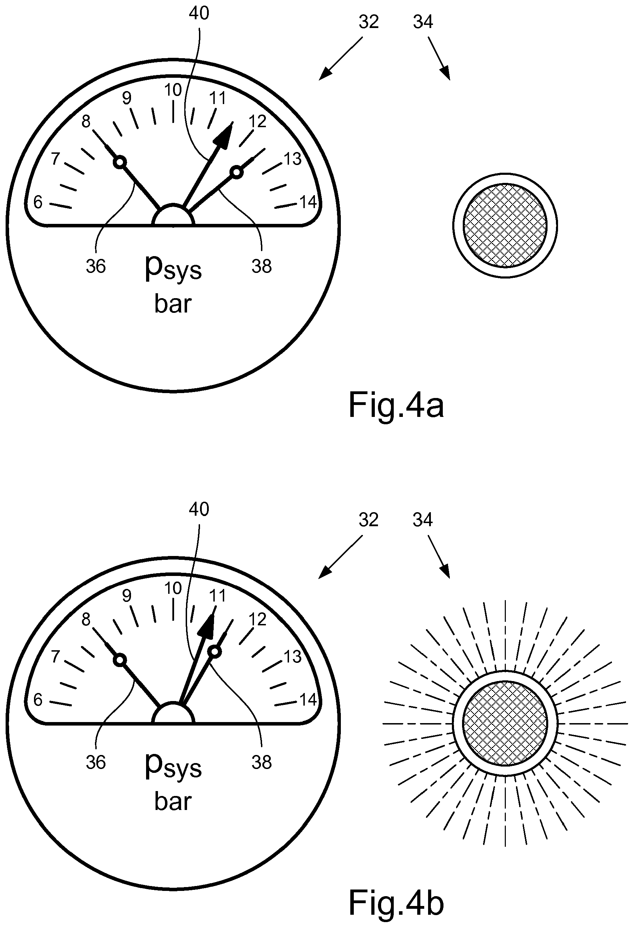

In den Figuren 4a und 4b ist jeweils eine Kombination von zwei Anzeigeinstrumenten 32, 34 abgebildet, mit denen der Fahrer eines Fahrzeugs über den aktuellen Versorgungsdruck p_{sys} und einen gegebenenfalls abgesenkten Abschaltdruckwert p_{cut-off_c} des Kompressors 6 informiert werden kann. Bei dem ersten Anzeigeinstrument 32 handelt es sich um ein Anzeigeinstrument, welches eine Druckskala von 6 bar bis 14 bar aufweist. Durch einen ersten Standzeiger 36 wird der Einschaltdruckwert p_{cut-on} des Kompressors 6 angezeigt. Durch einen zweiten Standzeiger 38 wird der Abschaltdruckwert p_{cut-off} des Kompressors 6 angezeigt, bei dem es sich gegebenenfalls auch um den abgesenkten Abschaltdruckwert p_{cut-off_c} handeln kann. Der sensorisch erfasste aktuelle Versorgungsdruck p_{sys} wird durch einen dynamischen Zeiger 40 angezeigt. Bei dem zweiten Anzeigeinstrument 34 handelt es sich um eine Warnleuchte. Beide Anzeigeinstrumente 32, 34 sind bevorzugt benachbart zueinander in einem Armaturenbrett oder einem Instrumententräger des betreffenden Fahrzeugs angeordnet.

Bei dem in Fig. 4a dargestellten Normalbetrieb der betreffenden Druckluftversorgungsanlage 10 beziehungsweise des zugeordneten Kompressors 6 ist der durch den ersten Standzeiger 36 angezeigte Einschaltdruckwert p_{cut-on} auf einen Wert von 8 bar eingestellt. Der durch den zweiten Standzeiger 38 angezeigte Abschaltdruckwert p_{cut-off} ist auf einen Wert von 12,5 bar eingestellt. Mittels des dynamischen Zeigers 40 wird ein aktueller Versorgungsdruck p_{sys} von 11,5 bar angezeigt. Die Warnleuchte 34 ist ausgeschaltet.

Bei dem in Fig. 4b dargestellten Notbetrieb der betreffenden Druckluftversorgungsanlage 10 beziehungsweise des zugeordneten Kompressors 6 gemäß einer der vorbeschriebenen Verfahrensvarianten ist der Einschaltdruckwert p_{cut-on} unverändert auf einen Wert von 8 bar eingestellt. Der Abschaltdruckwert p_{cut-off} ist jedoch aufgrund eines zuvor festgestellten Schlupfbetriebs der Reibungskupplung 4 auf einen korrigierten Abschaltdruckwert p_{cut-off_c} von vorliegend 11,5 bar abgesenkt, welcher nun durch dem zweiten Standzeiger 38 angezeigt wird. Durch den dynamischen Zeiger 40 wird ein aktueller Versorgungsdruck p_{sys} von 11 bar angezeigt. Aufgrund des Notbetriebs ist die Warnleuchte 34 eingeschaltet, wodurch der Fahrer auf die eingeschränkte Druckluftversorgung aufmerksam gemacht wird.

### Bezugszeichenliste (Bestandteil der Beschreibung)

- 2: Antriebsmotor
- 4: Reibungskupplung
- 6: Kompressor
- 8: Förderleitung
- 10: Druckluftversorgungsanlage
- 12: Druckluftaufbereitungseinheit
- 14: Mehrkreisschutzventileinheit
- 16: Elektronische Steuereinheit
- 18: Steuerdruckleitung
- 20: Hauptversorgungsleitung
- 22: Versorgungsleitungen
- 24: Kompressorsteuerventil
- 26: Drucksensor
- 32: Erstes Anzeigeinstrument, Anzeigeinstrument
- 34: Zweites Anzeigeinstrument, Warnleuchte
- 36: Erster Standzeiger
- 38: Zweiter Standzeiger
- 40: Dynamischer Zeiger
- A: Oberer Teildruckbereich
- B: Mittlerer Teildruckbereich
- C: Unterer Teildruckbereich
- p: Druck
- p_{cut-off}: Abschaltdruckwert
- p_{cut-off_c}: Korrigierter Abschaltdruckwert
- p_{cut-on}: Einschaltdruckwert
- p_{PI},: Plateaudruck
- p_{sys}: Versorgungsdruck
- t: Zeit
- t₀ - t₈: Zeitpunkte
- t₃', t₆': Zeitpunkte
- T: Zeitspanne (allgemein)
- T_{cd}: Mindestabkühlzeit
- T_{F1}: Erste Förderbetriebsphase
- T_{F2}: Zweite Förderbetriebsphase
- T_{F3}: Dritte Förderbetriebsphase
- T_{Fn}: n-te Förderbetriebsphase
- T_{H}: Haltezeitraum
- Δp: Druckdifferenz (allgemein)
- Δp_{c}: Druckdifferenz
- Δp_{sys}: Arbeitsdruckbereich
- Δp_{T}: Toleranzbreite

## Patentansprüche

1. Verfahren zur Funktionsüberwachung einer Reibungskupplung (4), die in einem Fahrzeug zwischen einem Antriebsmotor (2) und einem Kompressor (6) einer Druckluftversorgungsanlage (10) angeordnet sowie pneumatisch ausrückbar und einrückbar ist, wobei im Förderbetrieb des Kompressors (6) mindestens ein Betriebsparameter in einer elektronischen Steuereinheit (16) sensorisch erfasst und ausgewertet wird, und bei einem von der elektronische Steuereinheit (16) erkannten Schlupfbetrieb der Reibungskupplung (4) ein in der elektronischen Steuereinheit (16) abgespeicherter Wert für einen Abschaltdruck (p_{cut-off}) des Kompressors (6) verringert wird, **dadurch gekennzeichnet, dass** im Förderbetrieb des Kompressors (6) ein Versorgungsdruck (p_{sys}) in einer Hauptversorgungsleitung (20) mehrerer Druckluftverbraucherkreise oder in einer Versorgungsleitung (22) mindestens eines Druckluftverbraucherkreises fortlaufend sensorisch erfasst wird, dass ein Schlupfbetrieb der Reibungskupplung (4) dadurch erkannt wird, dass der Versorgungsdruck (p_{sys}) innerhalb einer vorgegebenen Toleranzbreite (Δp_{T}) und innerhalb eines vorgegebenen Haltezeitraums (T_{H}) auf einem konstanten Plateaudruck (p_{PI}) verharrt, welcher unterhalb des Abschaltdrucks (p_{cut-off}) des Kompressors (6) liegt (p_{PI} < p_{cut-off}), und dass nach einem erkannten Schlupfbetrieb der Reibungskupplung (4) der Förderbetrieb des Kompressors (6) durch das Ausrücken der Reibungskupplung (4) beendet wird, der Wert für den Abschaltdruck (p_{cut-off}) des Kompressors (6) auf einen korrigierten Abschaltdruck (p_{cut-off_c}) reduziert wird, welcher um eine vorgegebene Druckdifferenz (Δp_{c}) unterhalb des Plateaudrucks (p_{PI}) liegt (p_{cut-off_c} = p_{PI} - Δp_{c}), und ein Warnsignal und/oder eine Warninformation ausgegeben wird.

2. Verfahren nach Anspruch 1, **dadurch gekennzeichnet, dass** der Wert für den Abschaltdruck (p_{cut-off}) des Kompressors (6) erst dann auf einen korrigierten Abschaltdruckwert (p_{cut-off_c}) abgesenkt sowie ein Warnsignal und/oder eine Warninformation ausgegeben wird, wenn der Versorgungsdruck (p_{sys}) in mehreren aufeinanderfolgenden Förderbetriebsphasen (T_{F1}, T_{F2}, T_{F3}, T_{Fn}) des Kompressors (6) jeweils auf einem konstanten Plateaudruck (p_{PI}) verharrt, welcher unterhalb des Abschaltdruckwerts (p_{cut-off}) des Kompressors (6) liegt (p_{PI} < p_{cut-off}).

3. Verfahren nach Anspruch 2, **dadurch gekennzeichnet, dass** zwischen aufeinanderfolgenden Förderbetriebsphasen (T_{F1}, T_{F2}, T_{F3}, T_{Fn}) des Kompressors (6) jeweils eine vorgegebene Mindestabkühlzeit (T_{cd}) eingehalten wird, in der die Reibungskupplung (4) ausgerückt bleibt.

4. Verfahren nach einem der Ansprüche 1 bis 3, **dadurch gekennzeichnet, dass** der Arbeitsdruckbereich (Δp_{sys}) des Kompressors (6) zwischen dem Einschaltdruck (p_{cut-on}) und dem Abschaltdruck (p_{cut-off}) in einen oder mehrere Teildruckbereiche (A, B, C) unterteilt wird, und dass abhängig davon, in welchem Teildruckbereich (A, B, C) sich der korrigierte Abschaltdruckwert (p_{cut-off_c}) befindet, unterschiedliche, an den jeweiligen Teildruckbereich (A, B, C) angepasste Warnsignale und/oder Warninformationen ausgegeben werden.

5. Verfahren nach Anspruch 4, **dadurch gekennzeichnet, dass** der Arbeitsdruckbereich (Δp_{sys}) des Kompressors (6) zwischen dem Einschaltdruck (p_{cut-on}) und dem Abschaltdruck (p_{cut-off}) in drei Teildruckbereiche (A, B, C) unterteilt wird, und dass dann, wenn sich der korrigierte Abschaltdruckwert (p_{cut-off_c}) innerhalb des oberen Teildruckbereichs (A) befindet, eine Warninformation ausgegebenen wird, mit welcher der Fahrer über den leicht abgesenkten Abschaltdruck (p_{cut-off_c}) informiert sowie aufgefordert wird, innerhalb einer längeren Betriebsdauer oder Fahrstrecke eine Werkstatt anzufahren, und dass dann, wenn sich der korrigierte Abschaltdruckwert (p_{cut-off_c}) innerhalb des mittleren Teildruckbereichs (B) befindet, eine Warninformation ausgegebenen wird, mit welcher der Fahrer über den deutlich abgesenkten Abschaltdruck (p_{cut-off_c}) informiert sowie aufgefordert wird, innerhalb einer kürzeren Betriebsdauer oder Fahrstrecke eine Werkstatt anzufahren, und dass dann, wenn sich der korrigierte Abschaltdruckwert (p_{cut-off_c}) innerhalb des unteren Teildruckbereichs (C) befindet, eine Warninformation ausgegeben wird, mit welcher der Fahrer über den stark abgesenkten Abschaltdruck (p_{cut-off_c}) informiert sowie aufgefordert wird, sofort und auf dem kürzesten Weg eine Werkstatt anzufahren.

6. Verfahren nach einem der Ansprüche 1 bis 5, **dadurch gekennzeichnet, dass** der aktuelle Versorgungsdruck (p_{sys}) sowie der Wert des Einschaltdrucks (p_{cut-on}) und der Wert für den Abschaltdruck (p_{cut-off}) oder der Wert für den korrigierten Abschaltdruck (p_{cut-off_c}) des Kompressors (6) in einem Anzeigeinstrument (32) angezeigt werden, und dass bei Vorliegen eines abgesenkten Abschaltdruckwerts (p_{cut-off_c}) eine zugeordnete Warnleuchte (34) aufleuchtet und/oder ein akustisches Warnsignal ausgegeben wird.

## Claims

1. Method for monitoring the function of a friction clutch (4) which is arranged in a vehicle between a drive motor (2) and a compressor (6) of a compressed-air supply system (10) and can be disengaged and engaged pneumatically, in the delivery mode of the compressor (6), at least one operating parameter being detected by sensors and evaluated in an electronic control unit (16), and in the case of a slip mode of the friction clutch (4), which slip mode is detected by the electronic control unit (16), a value stored in the electronic control unit (16) for a cut-off pressure (p_{cut-off}) of the compressor (6) being reduced, **characterized in that,** in the delivery mode of the compressor (6), a supply pressure (p_{sys}) in a main supply line (20) of a plurality of compressed-air consumer circuits or in a supply line (22) of at least one compressed-air consumer circuit is continuously detected by sensors, **in that** a slip mode of the friction clutch (4) is detected by the supply pressure (p_{sys}) remaining within a predefined tolerance range (Δp_{T}) and within a predefined holding period (T_{H}) at a constant plateau pressure (p_{PI}), which is below the cut-off pressure (p_{cut-off}) of the compressor (6) (p_{PI} < p_{cut-off}), and **in that**, after a detected slip mode of the friction clutch (4), the delivery mode of the compressor (6) is terminated by the disengagement of the friction clutch (4), the value for the cut-off pressure (p_{cut-off}) of the compressor (6) is reduced to a corrected cut-off pressure (p_{cut-off_c}), which is below the plateau pressure (p_{PI}) by a predetermined pressure difference (Δp_{c}) (p_{cut-off_c} = p_{PI} - Δp_{c}), and a warning signal and/or warning information is/are output.

2. Method according to claim 1, **characterized in that** the value for the cut-off pressure (p_{cut-off}) of the compressor (6) is reduced to a corrected cut-off pressure (p_{cut-off_c}) and a warning signal and/or warning information is/are output only when the supply pressure (p_{sys}) in a plurality of consecutive delivery mode phases (T_{F1}, T_{F2}, T_{F3}, ... T_{Fn}) of the compressor (6) is in each case at a constant plateau pressure (p_{PI}), which is below the cut-off pressure (p_{cut-off}) of the compressor (6) (p_{PI} < p_{cut-off}).

3. Method according to claim 2, **characterized in that** a predefined minimum cooling time (T_{cd}) is maintained in each case between consecutive delivery mode phases (T_{F1}, T_{F2}, T_{F3}, ... T_{Fn}) of the compressor (6), in which minimum cooling time the friction clutch (4) remains disengaged.

4. Method according to any of claims 1 to 3, **characterized in that** the working pressure range (Δp_{sys}) of the compressor (6) between the switch-on pressure (p_{cut-on}) and the cut-off pressure (p_{cut-off}) is divided into one or more partial pressure ranges (A, B, C), and **in that**, depending on the partial pressure range (A, B, C) in which the corrected cut-off pressure (p_{cut-off_c}) is located, different warning signals and/or warning information adapted to the relevant partial pressure range (A, B, C) is/are output.

5. Method according to claim 4, **characterized in that** the working pressure range (Δp_{sys}) of the compressor (6) between the switch-on pressure (p_{cut-on}) and the cut-off pressure (p_{cut-off}) is divided into three partial pressure regions (A, B, C), and **in that**, when the corrected cut-off pressure (p_{cut-off_c}) is within the upper partial pressure range (A), warning information is then output by means of which the driver is informed about the slightly reduced cut-off pressure (p_{cut-off_c}) and is prompted to drive to a workshop within a longer operating time or driving distance, and **in that**, when the corrected cut-off pressure (p_{cut-off_c}) is within the middle partial pressure range (B), warning information is then output, by means of which the driver is informed of the significantly reduced cut-off pressure (p_{cut-off_c}) and is prompted to drive to a workshop within a shorter operating time or driving distance, and **in that**, when the corrected cut-off pressure (p_{cut-off_c}) is within the lower partial pressure range (C), warning information is then output, by means of which the driver is informed about the greatly reduced cut-off pressure (p_{cut-off_c}) and is prompted to drive to a workshop immediately and on the shortest path.

6. Method according to any of claims 1 to 5, **characterized in that** the current supply pressure (p_{sys}) and the value of the switch-on pressure (p_{cut-on}) and the value for the cut-off pressure (p_{cut-off}) or the value for the corrected cut-off pressure (p_{cut-off_c}) of the compressor (6) are displayed in a display instrument (32), and **in that**, when a reduced cut-off pressure value (p_{cut-off_c}) is present, an associated warning light (34) is illuminated and/or an acoustic warning signal is output.

## Revendications

1. Procédé permettant la surveillance du fonctionnement d'un accouplement à friction (4) disposé dans un véhicule entre un moteur d'entraînement (2) et un compresseur (6) d'un système d'alimentation en air comprimé (10) et pouvant être débrayé et embrayé de manière pneumatique, au moins un paramètre de fonctionnement étant détecté et évalué de manière sensorielle dans une unité de commande électronique (16) dans un mode de transport du compresseur (6), et lors de la détection d'un mode de glissement de l'accouplement à friction (4) par l'unité de commande électronique (16), une valeur mémorisée dans l'unité de commande électronique (16) d'une pression de désactivation (p_{cut-off}) du compresseur (6) étant réduite, **caractérisé en ce que**, dans le mode de transport du compresseur (6), une pression d'alimentation (p_{sys}) dans une conduite d'alimentation principale (20) de plusieurs circuits consommateurs d'air comprimé ou dans une conduite d'alimentation (22) d'au moins un circuit consommateur d'air comprimé est détectée de manière sensorielle en continu, **en ce qu'**un mode de glissement de l'accouplement à friction (4) est détecté par le fait que la pression d'alimentation (p_{sys}) est maintenue à une pression de plateau (p_{PI}) constante inférieure à la pression de désactivation (p_{cut-off}) du compresseur (6) (p_{PI} < p_{cut-off}) à l'intérieur d'une plage de tolérance prédéfinie (Δp_{T}) et pendant une période de maintien prédéfinie (T_{H}), et **en ce qu'**après un mode de glissement détecté de l'accouplement à friction (4), le mode de transport du compresseur (6) est interrompu par le débrayage de l'accouplement à friction (4), la valeur de la pression de désactivation (p_{cut-off}) du compresseur (6) est réduite jusqu'à une pression de désactivation corrigée (p_{cut-off_c}) inférieure à la pression de plateau (p_{PI}) d'une différence de pression prédéfinie (Δp_{c}) (p_{cut-off_c} = p_{PI} - Δp_{c}), et un signal d'avertissement et/ou des informations d'avertissement sont émis.

2. Procédé selon la revendication 1, **caractérisé en ce que** la valeur de la pression de désactivation (p_{cut-off}) du compresseur (6) est uniquement abaissée jusqu'à une valeur de pression de désactivation corrigée (p_{cut-off_c}) et un signal d'avertissement et/ou des informations d'avertissement sont émis lorsque la pression d'alimentation (p_{sys}) est respectivement maintenue à une pression de plateau (p_{PI}) constante inférieure à la valeur de pression de désactivation (p_{cut-off}) du compresseur (6) (p_{PI} < p_{cut-off}) dans plusieurs phases de mode de transport successives (T_{F1}, T_{F2}, T_{F3}, ...T_{Fn}) du compresseur (6).

3. Procédé selon la revendication 2, **caractérisé en ce que** respectivement un temps de refroidissement minimum (T_{cd}) prédéterminé, pendant lequel l'accouplement à friction (4) reste débrayé, est respecté entre des phases de mode de transport successives (T_{F1}, T_{F2}, T_{F3}, ...T_{Fn}) du compresseur (6).

4. Procédé selon l'une des revendications 1 à 3, **caractérisé en ce que** la plage de pression de travail (Δp_{sys}) du compresseur (6) entre la pression d'activation (p_{cut-on}) et la pression de désactivation (p_{cut-off}) est divisée en une ou plusieurs plages de pression partielle (A, B, C), et **en ce que**, en fonction de la plage de pression partielle (A, B, C) dans laquelle se trouve la valeur de pression de désactivation corrigée (p_{cut-off_c}), différents signaux d'avertissement et/ou informations d'avertissement adaptés à la plage de pression partielle (A, B, C) respective sont émis.

5. Procédé selon la revendication 4, **caractérisé en ce que** la plage de pression de travail (Δp_{sys}) du compresseur (6) entre la pression d'activation (p_{cut-on}) et la pression de désactivation (p_{cut-off}) est divisée en trois plages de pression partielle (A, B, C), et **en ce qu'**ensuite, lorsque la valeur de pression de désactivation corrigée (p_{cut-off_c}) se trouve dans la plage de pression partielle supérieure (A), des informations d'avertissement sont émises pour informer le conducteur de la pression de désactivation (p_{cut-off_c}) légèrement abaissée et lui demander de se diriger vers un garage au cours d'une période de fonctionnement plus longue ou d'un trajet plus long, et **en ce qu'**ensuite, lorsque la valeur de pression de désactivation corrigée (p_{cut-off_c}) se trouve dans la plage de pression partielle moyenne (B), des informations d'avertissement sont émises pour informer le conducteur de la pression de désactivation (p_{cut-off_c}) nettement abaissée et lui demander de se diriger vers un garage au cours d'une période de fonctionnement plus courte ou d'un trajet plus court, et **en ce qu'**ensuite, lorsque la valeur de pression de désactivation corrigée (p_{cut-off_c}) se trouve dans la plage de pression partielle inférieure (C), des informations d'avertissement sont émises pour informer le conducteur de la pression de désactivation (p_{cut-off_c}) fortement abaissée et lui demander de se diriger vers un garage immédiatement et le plus rapidement possible.

6. Procédé selon l'une des revendications 1 à 5, **caractérisé en ce que** la pression d'alimentation (p_{sys}) actuelle ainsi que la valeur de la pression d'activation (p_{cut-on}) et la valeur de la pression de désactivation (p_{cut-off}) ou la valeur de la pression de désactivation corrigée (p_{cut-off_c}) du compresseur (6) sont affichées sur un instrument d'affichage (32), et **en ce qu'**en présence d'une valeur de pression de désactivation (p_{cut-off_c}) abaissée, un avertisseur lumineux (34) associé s'allume et/ou un signal d'avertissement acoustique est émis.
